# EUROPÄISCHE PATENTSCHRIFT

(11) **EP 3 385 086 B1**
(45) Veröffentlichungstag und Bekanntmachung des Hinweises auf die Patenterteilung: **04.03.2020**
(21) Anmeldenummer: 18163986.5
(22) Anmeldetag: 26.03.2018
(51) Int. Cl.: B60B 17/00, G01M 17/10, G01B 21/08, B61K 9/12

(54) **VERFAHREN ZUR BESTIMMUNG DER AXIALEN RADREIFENDICKE EINES GUMMIGEFEDERTEN EISENBAHNRADS**
METHOD FOR DETERMINING AXIAL WHEEL TIRE THICKNESS OF A RUBBER-SUSPENDED RAILWAY WHEEL
PROCÉDÉ DE DÉTERMINATION DE L'ÉPAISSEUR AXIALE DES BANDAGES DE ROUES D'UNE ROUE ÉLASTIQUE DE VÉHICULE FERROVIAIRE

(30) Priorität: 04.04.2017 DE 102017003249
(43) Veröffentlichungstag der Anmeldung: 10.10.2018
(73) Patentinhaber: Jörn GmbH, 71336 Waiblingen (DE)
(72) Erfinder: Reinke, Kai, 71686 Remseck (DE)
(74) Vertreter: Liebl, Thomas

(56) Entgegenhaltungen:
- DE-A1- 10 346 537
- DE-A1-102015 011 762
- US-A- 3 221 412
- US-A1- 2011 024 576
- Michael Lenz: "Experimentelle und numerische Untersuchungen zum statischen und dynamischen Verhalten gummigefederter Räder", Tagungsband: 15. Internationale Schienenfahrzeugetagung: 01.-03. März 2017; Dresden, Rad, Schiene 2017, 1. März 2017 (2017-03-01), Seiten 66-68, XP055493634, ISBN: 978-3-87154-605-1 Gefunden im Internet: URL:https://www.tib.eu/de/suchen/id/TIBKAT %3A881231193/Tagungsband-15-Internationale -Schienenfahrzeugtagung/ [gefunden am 2018-07-18]

## Beschreibung

Die Erfindung betrifft ein Verfahren zur Bestimmung der Reifenraddicke eines gummigefederten Eisenbahnrads nach dem Oberbegriff des Anspruchs 1. Gummigefederte Eisenbahnräder werden seit langem bei Schienenfahrzeugen des Nah- und Regionalverkehrs, insbesondere im Eisenbahnverkehr bei Lokomotiven und Wagons sowie bei Straßenbahnen, U-Bahnen, etc. eingesetzt. Gummigefederte Eisenbahnräder weisen dabei einen formstabilen Scheibenradkörper, einen Radreifen bestimmter Dicke aus Stahl und einen dazwischen vorgespannt angeordneten Elastomerring als Elastomerspur und Elastomerfederung auf.

Die axiale Radreifendicke nimmt im Laufe des Fahrbetriebs durch einen Materialabtrag an der Radlauffläche allmählich ab bis zu einer vorgegebenen Radreifen-Mindestdicke, bei der eine sichere Radreifen-Laufstrecke beendet ist und ein Austausch zu erfolgen hat. Die axiale Richtungsbezeichnung bezieht sich auf Achsrichtungen in einem Flächen-Koordinatensystem einer Seitenansicht eines Eisenbahnrads.

Die Kontrolle der Radreifendicke wird derzeit von einer Kontrollperson bei einem Stillstand des Schienenfahrzeugs durch Augenschein und/oder durch Schläge auf das Eisenbahnrad und die Prüfung eines akustischen Signals durchgeführt. Diese Kontrollen sind aufwändig, kostenintensiv und nur im Stillstand durchzuführen, wobei die Kontrollsicherheit auch von individuellen Eindrücken und der Zuverlässigkeit eines Kontrolleurs abhängt.

Zudem sind experimentelle und nummerische Untersuchungen zum statischen und dynamischen Verhalten gummigefederter Eisenbahnräder bekannt (Tagungsband zur 15. Internationalen Schienenfahrzeugtagung von 1. bis 3. März 2017, Seiten 66 bis 68). Mit den nummerischen Untersuchungen sollen mit Hilfe eines Finite-Elemente-Modells Vorhersagen zum Verformungsverhalten und damit zum Betriebsverhalten der Räder unter dynamischen Lasten ermöglicht werden, wobei in der Modellbildung die Beanspruchung des Gummirings bei der Raddrehung durch druck-, schub- und kompressionsbedingte zyklische Be- und Entlastungen untersucht werden soll. Für experimentelle Untersuchungen wird ein gummigefedertes Messrad zur Erfassung von Relativbewegungen zwischen Radreifen und Scheibenradkörper beschrieben. Dazu sind am Messrad Sensoren für die Temperatur des Gummirings sowie am Radreifen Dehnmessstreifen angebracht. Die Messsignale der Sensoren sollen zur Modellbildung für die Entwicklung gummigefederter Räder mitverwendet werden, wobei mit Hilfe einer nummerischen Simulation insbesondere eine bessere Prognose des dynamischen Verhaltens unter betrieblichen Einsatzbedingungen ermöglicht werden soll.

Dabei wird auf die allgemeine Kenntnis Bezug genommen, dass ein solches gummigefedertes Eisenbahnrad im unbelasteten noch nicht montierten Herstellzustand konzentrisch kreisförmig aufgebaut ist mit dem unverformbaren kreisrunden Scheibenradkörper, an den sich nach axial außen der vorgespannte kreisrunde Elastomerring und der axial äußere kreisrunde Radreifen anschließt. Im am Schienenfahrzeug montierten Zustand verbleibt der formstabile Scheibenradkörper weiter kreisrund, wogegen der Verbund aus dem vorgespannten Elastomerring und dem Radreifen sowohl im Stand des Schienenfahrzeugs als auch im Fahrbetrieb durch die anliegende Last des Schienenfahrzeugs oval verformt wird. Im Fahrbetrieb und der damit verbundenen Radumdrehung ist diese Ovalverformung in Verbindung mit einer Be- und Entlastung des Elastomermaterials am Eisenbahnrad zyklisch umlaufend.

Weiter ist es bekannt, bei Schienenfahrzeugen mit Lagerteilen, die ein Elastomermaterial aufweisen, den Beginn eines Elastomermaterialversagens und damit den Beginn einer Restnutzungsdauer festzustellen (DE 10 2015 011 762 A1). Dazu werden bei jeweils gleichen Fahrbedingungen Verformungsmessungen durchgeführt, die einer relativen Steifigkeit des Elastomermaterials zugeordnet werden: Über eine lange Nutzungsdauer werden aufeinanderfolgende Verformungsmesswerte entsprechend Kenngrößen für die Lagersteifigkeit bzw. Elastomersteifigkeit in einer Messkurve gespeichert. Dabei zeigt sich, dass die Messkurve über eine sehr lange Nutzungsdauer einen sogenannten Plateaubereich ohne wesentliche Steifigkeitsänderung zeigt, in dem kein Materialversagen vorliegt. Wird der Plateauverlauf der Messkurve durch eine progressive Verlaufsänderung verlassen, ist dies ein sicherer Hinweis auf ein relativ schnell progressiv vorschreitendes Versagen des Elastomermaterials, das insbesondere durch eine progressive Zunahme einer durch Wechsellasten bedingten Auflösung eines Faserverbundes ausgelöst wird. Dann besteht nur noch eine relativ kurze Restnutzungsdauer des Lagerbauteils mit der Möglichkeit ein entsprechendes Warnsignal abzusetzen. Die Lebensdauer eines hiermit überwachten Lagerteils ist somit ausschließlich durch den Zustand des Elastomermaterials bestimmt, da die an das Elastomermaterial anschließenden Stützbauteile regelmäßig praktisch keinem Verschleiß unterliegen.

Bei einem Eisenbahnrad eines Schienenfahrzeugs ist dies jedoch völlig anders: Hier ist die maximale sichere Nutzungsdauer bzw. Laufstrecke durch den Verschleiß am Radreifen und die abnehmende Radreifendicke bestimmt, wobei der Elastomerring über die durch die Radreifendicke bestimmte maximale Laufstrecke kein Materialversagen aufweisen darf. Der Elastomerring wird somit aus Sicherheitsgründen über die gesamte durch die Radreifen-Mindestdicke begrenzte Laufstrecke im vorstehend genannten Plateaubereich betrieben und die vorbeschriebene Abweichung vom Plateaubereich zur Warnung für ein Elastomermaterialversagen wird bei einem Eisenbahnrad nicht erreicht, so dass eine vorbeschriebene Messeinrichtung zur Feststellung und Warnung vor einem Elastomermaterialversagen bei einem gummigefederten Eisenbahnrad nicht verwendbar ist.

Bei einem bekannten Messrad für Schienenfahrzeuge (DE 103 46 537 A1) sind zur direkten Messung einer vertikalen Hochkraft am Radreifen Radreifen-Messsensoren, vorzugsweise als Dehnungsmessstreifen, angeordnet.

Weiter ist ein Verfahren bekannt (US 2011/0024576 A1) zur Bestimmung des Zustands von Bauteilen eines Schienenfahrzeugs in Bewegung, wobei eine Lagertemperatur in einem oberen Bereich gemessen und mit weiteren gemessenen Temperaturen verglichen wird.

Zudem ist eine Vorrichtung bekannt (US 3 221 412 A) mit der eine Achse mit zwei Rädern eines Schienenfahrzeugs für eine genaue Vermessung angehoben werden kann.

Aufgabe der Erfindung ist es, ein Verfahren zur Bestimmung der axialen Radreifendicke eines gummigefederten Eisenbahnrads eines Schienenfahrzeugs zu schaffen, mit dem die Bestimmung der Radreifendicke einfach und sicher durchgeführt werden kann.
Die Aufgabe der Erfindung wird dadurch gelöst, dass das Verfahren mit einer am Eisenbahnfahrzeug angeordneten Einrichtung zu einer indirekten Bestimmung der Radreifendicke durchgeführt wird. Dabei ist der Elastomerring zusätzlich zu seiner Funktion als Elastomerfederung Bestandteil einer Sensorik der Einrichtung, welche den Elastomerring als Elastomer-Temperaturquelle, wenigstens einen dem Elastomermaterial zugeordneten Elastomertemperatur-Sensor, sowie wenigstens einen Umgebungstemperatur-Sensor und eine an die Sensoren direkt oder indirekt angeschlossene Mess- und Auswerteeinheit umfasst. Der Elastomerring soll auch hier in an sich bekannter Weise so dimensioniert sein, dass eine sichere, versagensfreie Elastomerring-Laufstrecke mit weitgehend gleichen Verformungseigenschaften, entsprechend einem Betrieb im vorstehend erläuterten Plateaubereich länger ist als die sichere, durch einen Radreifenverschleiß bedingte Radreifen-Laufstrecke.

Für das erfindungsgemäße Verfahren wird die im Fahrbetrieb zyklisch umlaufende Ovalverformung mit der entsprechenden Belastung und Entlastung des Elastomermaterials ausgenützt, bei der durch Walkarbeit im Elastomermaterial des Elastomerrings Wärmeenergie und damit eine messbare Temperaturerhöhung im Vergleich zur Umgebungstemperatur erzeugt wird.

Für vergleichbare, aussagefähige Messungen sind diese bei möglichst gleichen relevanten Messbedingungen durchzuführen. Dazu wird als Messbedingung mit der Einrichtung sowohl das Auftreten eines vorbestimmten, sich im Fahrbetrieb zeitversetzt wiederholenden jeweils gleichen Fahrbetriebszustand als auch ein ausgeglichener Temperaturzustand mit gleichbleibender Elastomertemperatur und Umgebungstemperatur festgestellt.

Ist diese Messbedingung erfüllt, wird ein Messvorgang oder bei länger gleichbleibender Messbedingung werden mehrere Messvorgänge nacheinander gestartet. Bei einem solchen Messvorgang wird die Differenz-Temperatur zwischen der durch die Walkarbeit höheren Elastomertemperatur und der niedrigeren Umgebungstemperatur gemessen.

Es wird empirisch festgestellt, wie hoch der Wert einer solchen Differenztemperatur sein kann und jeder bei einem Messvorgang messbaren Differenz-Temperatur wird dann eine empirisch bestimmte Radreifendicke zugeordnet. Diese Zuordnung wird in der Einrichtung in einem Kennfeld gespeichert und/oder durch eine gespeicherte Rechenoperation vorgegeben. Dabei wird die gewonnene Kenntnis genutzt, dass es eine nur mit geringen Toleranzen behaftete feste Zuordnung zwischen einer gemessenen Differenztemperatur und einer bestimmten Radreifendicke gibt. Dabei zeigt sich, dass vergleichsweise geringere Radreifendicken zur größeren Ovalverformungen führen, was wiederum eine höhere Walkarbeit und damit größere Werte der Differenztemperatur bedingt.

Somit wird nach einer im Fahrbetrieb bei gleichen Fahrbetriebszuständen gemessenen Differenztemperatur die zugeordnete Reifendicke aus dem Kennfeld ausgelesen und/oder durch die Rechenoperation ermittelt und steht dann als Radreifendickenmesssignal zur weiteren Verwendung zur Verfügung.

Mit dem erfindungsgemäßen Verfahren kann somit die Radreifendicke automatisch und personenunabhängig kostengünstig, einfach und sicher unmittelbar am und im Schienenfahrzeug ermittelt werden.

Das Erfordernis eines jeweils gleichen Fahrbetriebszustands kann insbesondere dadurch erfüllt werden, dass Messvorgänge jeweils bei bestimmten vorgegebenen Fahrgeschwindigkeiten durchgeführt werden, bei denen die durch den Grad der umlaufenden Ovalverformung in den Elastomerring eingebrachte Walkarbeit als Vergleichsgröße dient.

Um die Genauigkeit bei der Feststellung der Radreifendicke zu verbessern, kann als weitere Startbedingung für den Start eines Messvorgangs ein bestimmtes, innerhalb vorgegebener Grenzen liegendes Fahrzeuggewicht festgelegt werden. Vorzugsweise wird als zusätzliche oder alternative Startbedingung ein Temperaturfenster der aktuell gemessenen Umgebungstemperatur, insbesondere von 0°C bis 35°C vorgegeben, um ungünstige Einflüsse relativ hoher und relativ niedriger Umgebungstemperaturen auf ein Messergebnis auszuschließen.

Da bei einer Bremsung mit einem Bremsklotz am Eisenbahnrad ein relativ großer Wärmeeintrag zusätzlich zur Erwärmung durch Walkarbeit erfolgt, soll keine Messung bei oder kurz nach einer Bremsung, die das Messergebnis verfälschen würde, erfolgen.

Um die Messgenauigkeit für die Radreifen-Dickenwerte noch zu vergrößern, kann das Kennfeld und/oder die Rechenoperation mit der Zuordnung gemessener Differenz-Temperaturwerte zur Radreifen-Dickenwerten mit durch Einflussgrößen, insbesondere durch Gewichte und/oder aktuelle Umgebungstemperaturen bedingten Korrekturwerten empirisch erstellt werden. Zudem können mehrere aufeinanderfolgend gemessene Dickenwerte interpoliert und gemittelt werden.

Die Messbedingung eines ausgeglichenen Temperaturzustands kann mit der Mess- und Auswerteeinheit dadurch festgestellt werden, dass der Temperaturtransient der gemessenen Elastomertemperatur gegen Null geht.

Wenn im Laufe der Zeit ein Radreifen-Dickenwert ermittelt wird, der gleich einem vorgegebenen Radreifen-Mindestdickenwert ist, soll mit der Mess- und Auswerteeinheit ein Grenzwertsignal, insbesondere als optisches und/oder akustisches und/oder insbesondere durch Funk weiterleitbares Warnsignal abgegeben werden.

In einer bevorzugten Ausgestaltung des Verfahrens sollen die im Laufe der Zeit ermittelten Radreifen-Dickenwerte in einer Messkurve gespeichert werden. Damit ist eine Dokumentation für eine kontinuierliche Abnahme der Radreifendicke bis zur vorgegebenen Radreifen-Mindestdicke möglich.

In an sich bekannter Weise erfolgt zum Einsatzbeginn des Eisenbahnrads über eine vorgegebene relativ kurze Nutzungsdauer bzw. eine kurze Laufstrecke ein Setzvorgang im Elastomermaterial des Elastomerrings. Während dieser Zeit wird vorzugsweise kein Messvorgang durchgeführt, da einerseits während dieser Zeit Messergebnisse verfälscht sind und andererseits noch keine feststellbare Reduzierung der Radreifendicke vorliegt.

Ein oder vorzugsweise mehrere Elastomertemperatur-Sensoren können vorteilhaft im Elastomermaterial des Elastomerrings integriert, vorzugsweise einvulkanisiert werden. Zusätzlich oder alternativ können sie auch in einer Grenzfläche zwischen dem Scheibenradkörper und dem Elastomerring oder in der Grenzfläche zwischen dem Radreifen und dem Elastomerring angeordnet werden. Damit sind die Elastomertemperatur-Sensoren gegen Umwelteinflüsse geschützt. Maßnahmen für eine drahtlose Weiterleitung der gemessenen Temperaturwerte vom Eisenbahnrad an eine stationär im Schienenfahrzeug angebrachte Mess- und Auswerteeinheit sind aus dem Stand der Technik bekannt.

Der oder die Umgebungstemperatur-Sensoren sollen so weit vom Elastomerring beabstandet angeordnet werden, dass eine höhere Elastomertemperatur darauf keinen Einfluss hat.

Die Einrichtung zur indirekten Bestimmung der Radreifendicke kann relativ kostengünstig realisiert werden, da sie zumindest teilweise, insbesondere die Mess- und Auswerteeinheit mit ihren Komponenten in einer oder mehreren, fahrzeugseitig ohnehin vorhandenen Elektronikeinheiten integriert werden kann.

Anhand einer Zeichnung wird die Erfindung weiter erläutert.

Es zeigen:
- Figur 1: eine Seitenansicht eines unbelasteten Eisenbahnrads,
- Figur 2: einen Schnitt durch das Eisenbahnrad nach Figur 1 entlang der Linie A-A,
- Figur 3: eine Seitenansicht des Eisenbahnrads nach Figur 1 im montierten belasteten Zustand,
- Figur 4: einen Schnitt durch das Eisenbahnrad nach Figur 3 entlang der Linie A-A,
- Figur 5: einen Schnitt durch das Eisenbahnrad nach Figur 3 entlang der Linie B-B, und
- Figur 6: ein Ablaufdiagramm zum Verfahren zur Bestimmung der Radreifendicke.

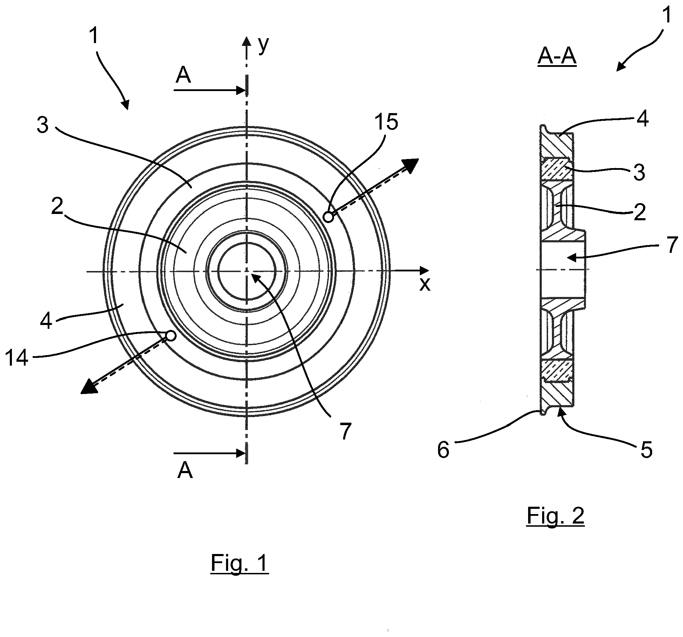

In den Figuren 1 und 2 ist ein Eisenbahnrad 1 im unbelasteten Herstellzustand gezeigt. Das Eisenbahnrad 1 umfasst einen zentralen kreisrunden und unverformbaren Scheibenradkörper 2, einen sich in der Seitenansicht nach Figur 1 in einem Flächenkoordinatensystem axial anschließenden kreisrunden, vorgespannten Elastomerring 3 und einen äußeren Radreifen 4 aus Stahl. Der Radreifen 4 weist eine Lauffläche 5 sowie einen Anlaufkranz 6 auf. Im unbelasteten Zustand ist der Aufbau des Eisenbahnrads 1 somit konzentrisch um eine zentrale Nabe 7 zur Aufnahme einer Achse.

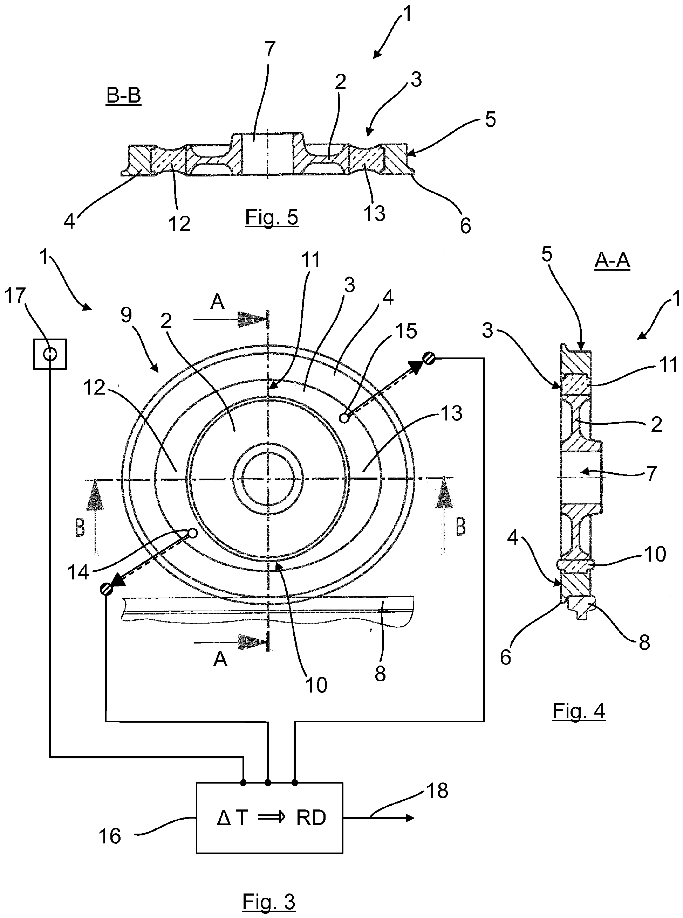

In den Figuren 3, 4 und 5 ist das Eisenbahnrad 1 in einer Seitenansicht sowie mit einem Vertikalschnitt und mit einem Horizontalschnitt im belasteten Zustand auf einem Schienenabschnitt 8 dargestellt, wobei die Last durch ein (nicht dargestelltes) Schienenfahrzeug sowohl im Stand als auch im Fahrbetrieb aufgebracht wird.

Ersichtlich behält der unverformbare, stabile Scheibenradkörper 2 seine kreisrunde Form wogegen der verformbare Elastomerring und der daran axial anschließende Radreifen zur Ovalform 9 durch die wirkende Last verformt sind. Insbesondere ist der Elastomerring 3 ovalisiert, wobei der vertikal untere Bereich 10 unter Druck zusammengepresst ist und der vertikal obere Bereich 11 weitgehend unverformt ist. Die beiden horizontal seitlichen Bereiche 12, 13 sind im Vergleich zum unbelasteten Zustand gedehnt.

Die in den Figuren 3 bis 5 statisch dargestellte Ovalform läuft bei einer Drehung des Eisenbahnrads 1 im Fahrbetrieb, bezogen auf das Eisenbahnrad, mit der beschriebenen Be- und Entlastung des Elastomermaterials zyklisch um, wodurch im Elastomermaterial des Elastomerrings 3 durch Walkarbeit Wärme entsteht, die zu einer Temperaturerhöhung im Elastomerring im Vergleich zur Umgebungstemperatur führt.

Diese erhöhte Elastomertemperatur wird hier beispielhaft mit zwei diagonal versetzten Elastomertemperatur-Sensoren 14, 15 erfasst und (teilweise drahtlos) einer Mess- und Auswerteeinheit 16 zugeführt. Zudem wird die Umgebungstemperatur mit einem Umgebungstemperatur-Sensor 17 gemessen und der entsprechende Messwert ebenfalls der Mess- und Auswerteeinheit 16 zugeführt.

In der Mess- und Auswerteeinheit 16 wird eine Differenztemperatur ΔT aus der Umgebungstemperatur und der dagegen höheren Elastomertemperatur berechnet und dieser Wert wird aus einem Kennfeld einer Radreifendicke RD zugeordnet. Der Wert der damit indirekt gemessenen Radreifendicke steht zur weiteren Verwendung zur Verfügung (Pfeil 18) und kann insbesondere zur Dokumentation in einer Messkurve und/oder zur Warnung bei einer Grenzwertüberschreitung verwendet werden.

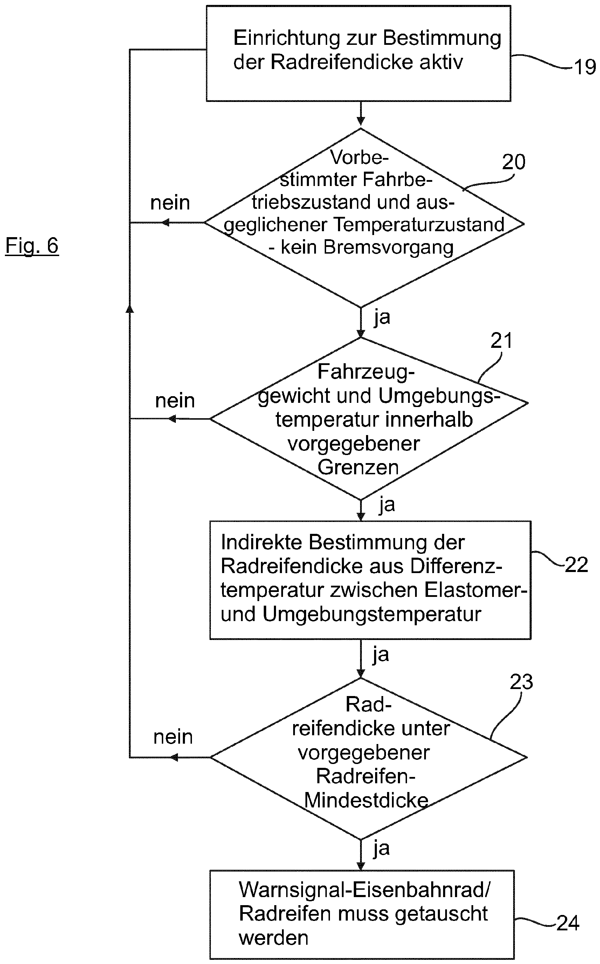

Im Ablaufdiagramm nach Figur 6 ist die Prozessabfolge anhand von Status-Prozessrechtecken und Entscheidungsrauten dargestellt:
Gemäß dem ersten Rechteck 19 ist die Einrichtung zur Bestimmung der Radreifendicke aktiv und messbereit.

In der Entscheidungsraute 20 wird geprüft, ob ein vorbestimmter Fahrbetriebszustand bei einem ausgeglichenen Temperaturzustand vorliegt sowie kein Bremsvorgang mit einem eine Messung verfälschenden Wärmeeintrag erfolgt ist. Bei einer positiven Entscheidung wird weiter in der Entscheidungsraute 21 geprüft, ob das Fahrzeuggewicht, insbesondere bei möglichen unterschiedlichen Beladungen sowie die Umgebungstemperatur innerhalb vorgegebener Grenzen liegt.

Falls auch hier eine positive Entscheidung vorliegt, wird ein Messvorgang zur indirekten Bestimmung der Radreifendicke aus der Differenztemperatur zwischen Elastomertemperatur und Umgebungstemperatur mit Hilfe eines Kennfelds gestartet (Rechteck 22).

Die ermittelte Radreifendicke wird in der Entscheidungsraute 23 daraufhin überprüft, ob eine vorgegebene Radreifen-Mindestdicke erreicht oder gegebenenfalls unterschritten ist.

Wenn dies festgestellt wurde, wird ein Warnsignal abgegeben, dass das Eisenbahnrad/Radreifen getauscht werden muss (Rechteck 24).

## Patentansprüche

1. Verfahren zur Bestimmung der axialen Radreifendicke (RD) eines gummigefederten Eisenbahnrads (1) eines Schienenfahrzeugs, welches einen Scheibenradkörper (2), einen Radreifen (4) aus Stahl und einen dazwischen vorgespannt angeordneten Elastomerring (3) als Elastomerspur und Elastomerfederung umfasst, wobei
- die Radreifendicke (RD) im Laufe des Fahrbetriebs durch einen Materialabtrag an der Radlauffläche (5) allmählich abnimmt bis zu einer vorgegebenen Radreifen-Mindestdicke, bei der eine sichere Radreifen-Laufstrecke beendet ist und ein Austausch zu erfolgen hat, wobei
- das Verfahren mit einer am Eisenbahnfahrzeug angeordneten Einrichtung zur indirekten Bestimmung der Radreifendicke (RD) durchgeführt wird, bei der der Elastomerring (3) zusätzlich zu seiner Funktion als Elastomerfederung Bestandteil einer Sensorik der Einrichtung ist, welche den Elastomerring (3) als Elastomertemperatur-Quelle, wenigstens einen elastomermaterialzugeordneten Elastomertemperatur-Sensor (14, 15), sowie wenigstens einen Umgebungstemperatur-Sensor (17) und eine an die Sensoren (14, 15, 17) direkt oder indirekt angeschlossene Mess- und Auswerteeinheit (16) umfasst, und
- der Elastomerring (3) so dimensioniert ist, dass eine sichere, versagensfreie Elastomerring-Laufstrecke bei weitgehend gleichen Verformungseigenschaften länger ist als die sichere, einen Austausch durch einen Radreifenverschleiß bedingende Radreifen-Laufstrecke,
- **dadurch gekennzeichnet, dass** als Messbedingung mit der Einrichtung sowohl das Auftreten eines vorbestimmten, sich im Fahrbetrieb zeitversetzt wiederholenden, jeweils gleichen Fahrbetriebszustands als auch ein ausgeglichener Temperaturzustand mit gleichbleibender Elastomertemperatur und Umgebungstemperatur festgestellt wird,
- dass bei festgestellter Messbedingung ein Messvorgang und/oder bei gleichbleibender Messbedingung mehrere Messvorgänge nacheinander gestartet werden und bei einem Messvorgang die Differenz-Temperatur (ΔT) zwischen der durch Walkarbeit höheren Elastomertemperatur und der niedrigeren Umgebungstemperatur gemessen wird,
- dass jeder bei einem Messvorgang messbaren Differenz-Temperatur (ΔT) eine empirisch bestimmte Radreifendicke (RD) zugeordnet wird und diese Zuordnung in der Einrichtung in einem Kennfeld gespeichert und/oder durch eine gespeicherte Rechenoperation vorgegeben wird, und
- dass nach einer gemessenen Differenz-Temperatur (ΔT) die zugeordnete Radreifendicke (RD) aus dem Kennfeld ausgelesen und/oder durch die Rechenoperation ermittelt wird und als Radreifendicken-Messsignal zur weiteren Verwendung zur Verfügung steht.

2. Verfahren nach Anspruch 1, **dadurch gekennzeichnet, dass** als Messbedingung für einen jeweils gleichen Fahrbetriebszustand eine bestimmte Fahrgeschwindigkeit vorgegeben wird.

3. Verfahren nach Anspruch 2, **dadurch gekennzeichnet,**
- **dass** als weitere Startbedingungen für einen Start eines Messvorgangs ein bestimmtes, innerhalb vorgegebener Grenzen liegendes Fahrzeuggewicht vorliegt und/oder
- **dass** die aktuell gemessene Umgebungstemperatur in einem vorgegebenen Temperaturfenster insbesondere in einem Temperaturbereich von 0 °C bis 35 °C, liegt und/oder
- **dass** am Eisenbahnrad (1) aktuell und in einem vorausgegangenen, vorgegebenen Zeitabschnitt keine Bremsung mit einem Wärmeeintrag erfolgt ist.

4. Verfahren nach einem der vor Ansprüche 2 bis 3, **dadurch gekennzeichnet, dass** das Kennfeld und/oder die Rechenoperation mit der Zuordnung gemessener Differenz-Temperaturwerte (ΔT) zu Radreifen-Dickenwerten (RD) mit durch Einflussgrößen, insbesondere durch Gewichte und/oder aktuelle Umgebungstemperaturen bedingten Korrekturwerten, empirisch erstellt wird.

5. Verfahren nach einem der Ansprüche 1 bis 4, **dadurch gekennzeichnet, dass** mehrere aufeinanderfolgende, indirekt gemessene, vorzugsweise in einem Messvorgang gemessene Radreifen-Dickenwerte (RD) zu einem für eine Weiterverwendung zur Verfügung stehenden Radreifen-Dickenwert (RD) gemittelt werden.

6. Verfahren nach einem der Ansprüche 2 bis 5, **dadurch gekennzeichnet, dass** die Messbedingung eines ausgeglichenen Temperaturzustands mit der Mess- und Auswerteeinheit (16) dadurch festgestellt wird, dass der Temperaturtransient der gemessenen Elastomertemperatur gegen Null geht.

7. Verfahren nach einem der Ansprüche 1 bis 6, **dadurch gekennzeichnet, dass** bei einem festgestellten Radreifen-Dickenwert (RD) gleich einem Grenzwert als vorgegebenen Radreifen-Mindestdickenwert eine Grenzwerteinheit der Mess- und Auswerteeinheit (16) ein Grenzwertsignal, insbesondere als optisches und/oder akustisches und/oder insbesondere durch Funk weiterleitbares Warnsignal abgibt.

8. Verfahren nach einem der Ansprüche 1 bis 7, **dadurch gekennzeichnet, dass** die im Laufe der Zeit ermittelten Radreifen-Dickenwerte (RD) in einer Messkurve gespeichert werden, insbesondere zur Dokumentation einer kontinuierlichen Abnahme der Radreifendicke (RD).

9. Verfahren nach einem der Ansprüche 1 bis 8, **dadurch gekennzeichnet, dass** zum Einsatzbeginn des Eisenbahnrads (1) über eine vorgegebene relativ kurze Nutzungsdauer und/oder kurze Laufstrecke ein Setzvorgang im Elastomermaterial des Elastomerrings (3) erfolgt und während des Setzvorgangs kein Messvorgang gestartet wird.

10. Verfahren nach einem der Ansprüche 1 bis 9, **dadurch gekennzeichnet,**
**dass** der oder die Elastomertemperatur-Sensoren (14, 15) am Elastomermaterial des Elastomerrings integriert, vorzugsweise einvulkansiert sind und/oder in einer Grenzfläche zwischen dem Scheibenrad-Körper (2) und dem Elastomerring (3) oder in der Grenzfläche zwischen dem Radreifen (4) und dem Elastomerring (3) angeordnet sind, und
**dass** der oder die Umgebungstemperatur-Sensoren (17) beabstandet vom Elastomerring (3) angeordnet sind, dergestalt, dass von einer erhöhten Elastomerring-Temperatur kein Einfluss auf den oder die Umgebungstemperatur-Sensoren (17) ausgeht.

11. Verfahren nach einem der Ansprüche 1 bis 10, **dadurch gekennzeichnet, dass** die Einrichtung zur indirekten Bestimmung der Radreifendicke (RD) zumindest teilweise, insbesondere die Mess- und Auswerteeinheit (16) mit ihren Komponenten, in einer oder mehreren fahrzeugseitigen, dort für andere Funktionen verwendeten, Elektronikeinheiten integriert ist.

## Claims

1. Method for determining the axial wheel tyre thickness (RD) of a rubber-sprung railway wheel (1) of a rail vehicle which comprises a disc wheel body (2), a wheel tyre (4) made of steel and an elastomer ring (3), as an elastomer part and elastomer suspension element, arranged in a prestressed fashion between the latter, wherein
- over the course of the driving operation the wheel tyre thickness (RD) gradually decreases, as a result of material erosion on the wheel tread (RD), up to a predefined wheel tyre minimum thickness at which a safe wheel tyre running distance has ended and replacement has to take place,
wherein
- the method is carried out with a device which is arranged on the rail vehicle and has the purpose of indirectly determining the wheel tyre thickness (RD), in which device the elastomer ring (3), in addition to its function as an elastomer suspension element, is a component of a sensor system of the device, which comprises the elastomer ring (3) as an elastomer temperature source, at least one elastomer temperature sensor (14, 15) which is assigned to the elastomer material, and at least one ambient temperature sensor (17) and a measuring and evaluation unit (16) which is directly or indirectly connected to the sensors (14, 15, 17), and
- the elastomer ring (3) is dimensioned in such a way that a safe, failure-free elastomer ring running distance with largely identical deformation properties is longer than the safe wheel tyre running distance which makes exchange necessary as a result of wear on the wheel tyre,
**characterized in that** the device is used to detect, as a measuring condition, both the occurrence of a predetermined respectively identical driving operating state which repeats with staggered timing during the driving operation as well as a balanced temperature state with a constant elastomer temperature and ambient temperature,
- **in that** when the measuring condition is detected a measurement process is started, and/or when a measuring condition is constant a plurality of measuring processes are started in succession, and during a measuring process the difference temperature (ΔT) between the elastomer temperature which is higher as a result of flexure work and the lower ambient temperature is measured,
- **in that** every difference temperature (ΔT) which can be measured during the measuring process is assigned an empirically determined wheel tyre thickness (RD), and this assignment is stored in a characteristic diagram in the device and/or predefined by means of a stored computing operation, and
- **in that** after a measured difference temperature (ΔT) the assigned wheel tyre thickness (RD) is read out of the characteristic diagram and/or is determined by means of the computing operation and is available as a wheel tyre thickness measurement signal for further use.

2. Method according to Claim 1, **characterized in that** a determined velocity is predefined as a measuring condition for a respectively identical driving operating state.

3. Method according to Claim 2, **characterized**
- **in that** a specific vehicle weight which lies within predefined limits is present as further starting conditions for a start of a measuring process, and/or
- **in that** the currently measured ambient temperature lies in a predefined temperature window, in particular in a temperature range from 0°C to 35°C, and/or
- **in that** braking with input of heat is not occurring currently at the railway wheel (1) and has not occurred there in a preceding, predefined time period.

4. Method according to one of Claims 2 to 3, **characterized in that** the characteristic diagram and/or the computing operation is empirically produced with the assignment of measured difference temperature values (ΔT) to wheel tyre thickness values (RD) with correction values which are conditioned by influencing variables, in particular by weights and/or current ambient temperatures.

5. Method according to one of Claims 1 to 4, **characterized in that** a plurality of successive wheel tyre thickness values (RD) which are measured indirectly, preferably measured in a measuring process, are averaged to form a wheel tyre thickness value (RD) which is available for further use.

6. Method according to one of Claims 2 to 5, **characterized in that** the measuring condition of a balanced temperature state is detected with the measuring and evaluation unit (16) by virtue of the fact that the temperature transient of the measured elastomer temperature tends towards zero.

7. Method according to one of Claims 1 to 6, **characterized in that** when a wheel tyre thickness value (RD) is detected which is equal to a limiting value as a predefined wheel tyre minimum thickness value, a limiting value unit of the measuring and evaluation unit (16) outputs a limiting value signal, in particular as an optical and/or acoustic warning signal and/or in particular as a warning signal which can be passed on by radio.

8. Method according to one of Claims 1 to 7, **characterized in that** the wheel tyre thickness values (RD) which are determined in the course of time are stored in a measuring curve, in particular for the documentation of a continuous decrease in the wheel tyre thickness (RD).

9. Method according to one of Claims 1 to 8, **characterized in that** in order to begin to use the railway wheel (1) a setting process takes place in the elastomer material of the elastomer ring (3) over a predefined relatively short period of use and/or short running distance, and a measuring process is not started during the setting process.

10. Method according to one of Claims 1 to 9, **characterized**
**in that** the elastomer temperature sensor or sensors (14, 15) is/are integrated onto the elastomer material of the elastomer ring, preferably vulcanized therein and/or arranged in a boundary face between the disc wheel body (2) and the elastomer ring (3) or in the boundary face between the wheel tyre (4) and the elastomer ring (3), and
**in that** the temperature sensor or sensors (17) are arranged spaced apart from the elastomer ring (3) in such a way that an increased elastomer ring temperature does not influence the ambient temperature sensor or sensors (17).

11. Method according to one of Claims 1 to 10, **characterized in that** the device for indirectly determining the wheel tyre thickness (RD) is at least partially integrated, in particular the measuring and evaluation unit (16) with its components, in one or more vehicle-mounted electronic units which are used there for other functions.

## Revendications

1. Procédé de détermination d'une épaisseur de bandage de roue (RD) axiale d'une roue de chemin de fer (1) à amortissement par caoutchouc d'un véhicule ferroviaire, laquelle comporte un corps de roue pleine (2), un bandage de roue (4) en acier et un anneau en élastomère (3) disposé précontraint entre ceux-ci en tant que bande en élastomère ou amortissement en élastomère,
- l'épaisseur de bandage de roue (RD) diminuant graduellement au cours du régime de déplacement par un enlèvement de matière au niveau de la surface de roulement de roue (5) jusqu'à une épaisseur minimale de bandage de roue prédéfinie, à laquelle un parcours de bandage de roue fiable prend fin et un remplacement doit avoir lieu,
- le procédé étant mis en œuvre avec un dispositif de détermination indirecte de l'épaisseur de bandage de roue (RD) qui est disposé sur le véhicule ferroviaire, avec lequel l'anneau en élastomère (3), en plus de sa fonction d'amortissement en élastomère, est un élément constitutif d'un système de détection du dispositif, lequel comporte l'anneau en élastomère (3) en tant que source de température d'élastomère, au moins un capteur de température d'élastomère (14, 15) associé au matériau élastomère ainsi qu'au moins un capteur de température ambiante (17) et une unité de mesure et d'interprétation (16) raccordée directement ou indirectement aux capteurs (14, 15, 17), et
- l'anneau en élastomère (3) étant dimensionné de telle sorte qu'un parcours d'anneau en élastomère fiable exempt de défaillance, avec des propriétés de déformation largement identiques, est plus long que le parcours de bandage de roue fiable qui conditionne un remplacement du fait de l'usure du bandage de roue,
**caractérisé en ce que** la condition de mesure fixée avec le dispositif est à la fois la survenance d'un état opérationnel de déplacement prédéterminé, respectivement identique, qui se répète de manière décalée dans le temps en régime de déplacement, ainsi qu'un état de température équilibré avec une température d'élastomère et une température ambiante constantes,
- **en ce qu'**en présence de la condition de mesure fixée, une opération de mesure et/ou en présence d'une condition de mesure constante, plusieurs opérations de mesure sont démarrées l'une après l'autre et la température différentielle (ΔT) entre la température d'élastomère plus élevée en raison du travail de foulage et la température ambiante plus basse est mesurée lors d'une opération de mesure,
- **en ce qu'**une épaisseur de bandage de roue (RD) déterminée empiriquement est associée à chaque température différentielle (ΔT) mesurable lors d'une opération de mesure et cette association est enregistrée dans un diagramme caractéristique dans le dispositif et/ou prédéfinie par une opération de calcul mémorisée, et
- en ce l'épaisseur de bandage de roue (RD) associée est lue depuis le diagramme caractéristique et/ou identifiée par l'opération de calcul d'après une température différentielle (ΔT) mesurée et est à disposition en tant que signal de mesure d'épaisseur de bandage de roue pour une utilisation ultérieure.

2. Procédé selon la revendication 1, **caractérisé en ce que** la condition de mesure prédéfinie pour un état opérationnel de déplacement respectivement identique est une vitesse de déplacement déterminée.

3. Procédé selon la revendication 2, **caractérisé en ce**
- **que** des conditions de démarrage supplémentaires pour un démarrage d'une opération de mesure sont la présence d'un poids de véhicule déterminé qui se trouve au sein de limites prédéfinies et/ou
- **que** la température ambiante actuellement mesurée se trouve dans une fenêtre de température prédéfinie, notamment dans une plage de températures de 0 °C à 35 °C et/ou
- **qu'**aucun freinage avec apport de chaleur n'a actuellement lieu au niveau de la roue de chemin de fer (1) et n'a eu lieu dans une période prédéfinie passée.

4. Procédé selon l'une des revendications 2 et 3, **caractérisé en ce que** le diagramme caractéristique et/ou l'opération de calcul avec l'association des valeurs de température différentielle (ΔT) mesurée à des valeurs d'épaisseur de bandage de roue (RD) est créé empiriquement avec des valeurs de correction conditionnées par des grandeurs d'influence, notamment par des poids et/ou des températures ambiantes actuelles.

5. Procédé selon l'une des revendications 1 à 4, **caractérisé en ce que** plusieurs valeurs d'épaisseur de bandage de roue (RD) successives, mesurées indirectement, de préférence mesurées dans une opération de mesure, sont intégrées en une valeur d'épaisseur de bandage de roue (RD) à disposition pour une utilisation ultérieure.

6. Procédé selon l'une des revendications 2 à 5, **caractérisé en ce que** la condition de mesure d'un état de température équilibré est fixée avec l'unité de mesure et d'interprétation (16) par le fait que la transitoire de température de la température d'élastomère mesurée tend vers zéro.

7. Procédé selon l'une des revendications 1 à 6, **caractérisé en ce qu'**en présence d'une valeur d'épaisseur de bandage de roue (RD) constatée égale à une valeur limite en tant que valeur d'épaisseur minimale de bandage de roue prédéfinie, une unité de valeur limite de l'unité de mesure et d'interprétation (16) délivre un signal de valeur limite, notamment sous la forme d'un signal d'alerte visuel et/ou sonore et/ou notamment transmissible par radio.

8. Procédé selon l'une des revendications 1 à 7, **caractérisé en ce que** les valeurs d'épaisseur de bandage de roue (RD) identifiées au cours du temps sont enregistrées dans une courbe de mesure, notamment à des fins de documentation d'une diminution continue de l'épaisseur de bandage de roue (RD).

9. Procédé selon l'une des revendications 1 à 8, **caractérisé en ce qu'**au début de l'utilisation de la roue de chemin de fer (1), une opération de tassement a lieu dans le matériau élastomère de l'anneau en élastomère (3) sur une durée d'utilisation prédéfinie relativement courte et/ou un parcours court et aucune opération de mesure n'est démarrée pendant l'opération de tassement.

10. Procédé selon l'une des revendications 1 à 9, **caractérisé en ce que** le ou les capteurs de température d'élastomère (14, 15) sont intégrés, de préférence incorporés par vulcanisation dans le matériau élastomère de l'anneau en élastomère et/ou sont disposés dans une interface entre le corps de roue pleine (2) et l'anneau en élastomère (3) ou dans l'interface entre le bandage de roue (4) et l'anneau en élastomère (3), et
**en ce que** le ou les capteurs de température ambiante (17) sont disposés espacés de l'anneau en élastomère (3) de telle sorte qu'une température accrue de l'anneau en élastomère n'exerce aucune influence sur le ou les capteurs de température ambiante (17).

11. Procédé selon l'une des revendications 1 à 10, **caractérisé en ce que** le dispositif de détermination indirecte de l'épaisseur de bandage de roue (RD), notamment l'unité de mesure et d'interprétation (16) avec ses composants, est au moins partiellement intégré dans une ou plusieurs unités électroniques côté véhicule qui y sont utilisées pour d'autres fonctions.
